# EUROPÄISCHE PATENTSCHRIFT

(11) **EP 3 718 028 B1**
(45) Veröffentlichungstag und Bekanntmachung des Hinweises auf die Patenterteilung: **26.02.2025**
(21) Anmeldenummer: 18796460.6
(22) Anmeldetag: 07.11.2018
(51) Int. Cl.: G06F 17/18

(54) **VERFAHREN UND COMPUTERPROGRAMMPRODUKT ZUR ERMITTLUNG DER MESSUNSICHERHEIT EINES MESSSYSTEMS**
METHOD AND COMPUTER PROGRAM PRODUCT FOR DETERMINING THE MEASUREMENT UNCERTAINTY OF A MEASUREMENT SYSTEM
PROCÉDÉ ET PRODUIT-PROGRAMME INFORMATIQUE PERMETTANT DE DÉTERMINER L'INCERTITUDE DE MESURE D'UN SYSTÈME DE MESURE

(30) Priorität: 30.11.2017 EP 17204558
(43) Veröffentlichungstag der Anmeldung: 07.10.2020
(73) Patentinhaber: Kistler Holding AG, 8408 Winterthur ZH (CH)
(72) Erfinder: SCHAAD, Marc, 5035 Unterentfelden (CH); SCHADING, Georg, 5420 Ehrendingen (CH); ANGLIKER, Marco, 8032 Zürich (CH); EHRENSPERGER, Viola, 8444 Henggart (CH)
(86) Internationale Anmeldenummer: PCT/EP2018/080381
(87) Internationale Veröffentlichungsnummer: WO 2019/105693

(56) Entgegenhaltungen:
- SOMMER K D ET AL: "Systematic approach to the modelling of measurements for uncertainty evaluation", METROLOGIA, INSTITUTE OF PHYSICS PUBLISHING, BRISTOL, GB, vol. 43, no. 4, August 2006 (2006-08-01), pages S200 - S210, XP020095315, ISSN: 0026-1394, DOI: 10.1088/0026-1394/43/4/S06
- KISTLER: "The entire measuring chain from a single source", COMPANY BROCHURE, August 2018 (2018-08-01), XP055498146, Retrieved from the Internet <URL:https://www.kistler.com/uploads/961-121e.pdf> [retrieved on 20180807]
- KISTLER: "KiDAQ - data acquisition at a new level", COMPANY BROCHURE, August 2018 (2018-08-01), XP055498149, Retrieved from the Internet <URL:https://www.kistler.com/?type=669&fid=468&model=download> [retrieved on 20180807]

## Beschreibung

### Technisches Gebiet

Die Erfindung betrifft ein Verfahren und ein Computerprogrammprodukt zur Ermittlung der Messunsicherheit eines Messsystems nach dem Oberbegriff des unabhängigen Anspruchs.

### Stand der Technik

Bekanntlich wird eine physikalische Messgrösse mit einem Messsystem erfasst. Die physikalische Messgrösse kann eine Kraft, ein Gewicht, eine Temperatur, usw. sein. Die physikalische Messgrösse wird dabei als Messwert nach Zahl und Einheit dargestellt. Die Einheit ist üblicherweise in Newton (N), Kilogramm (kg), Kelvin (K), usw. normiert.

Im Allgemeinen sind mehrere zeitlich und räumlich voneinander getrennte Schritte notwendig, um die physikalische Messgrösse zu erfassen. Beispielsweise wird eine Temperatur in einem Messraum gemessen, dafür erfasst ein im Messraum angeordneter Sensor einen elektrischen Widerstand als elektrische Spannung, die elektrische Spannung wird über ein Signalkabel als Messsignal zu einer räumlich vom Messraum entfernten Auswerteeinheit übermittelt, dort wird das Messsignal elektrisch verstärkt und auf einer Anzeige als Messwert dargestellt. Die Messung der Temperatur erfolgt zeitlich vor der Darstellung des Messwertes. Ein solches Messsystem weist also mehrere Übertragungsglieder wie Sensor, Messkabel und Auswerteeinheit auf, welche Übertragungsglieder eine Messkette bilden. Direkt benachbarte Übertragungsglieder der Messkette stehen für die Erfassung der physikalischen Messgrösse in einer Ursache-Wirkung-Beziehung zueinander.

Die Erfassung der physikalischen Messgrösse ist mit einer Messunsicherheit behaftet, denn der Messwert weicht immer vom wahren Wert ab. Deswegen fordert ISO/IEC Guide 98-3:2008-09, die physikalische Messgrösse als besten Schätzwert mit einem beigeordneten Überdeckungsintervall darzustellen. Der beste Schätzwert ist ein arithmetisches Mittel mehrerer Messwerte. Die Messunsicherheit ist die Differenz zwischen einer oberen und unteren Grenze des Überdeckungsintervalls und dem besten Schätzwert. Der wahre Wert liegt mit vordefinierter Überdeckungswahrscheinlichkeit im Überdeckungsintervall.

Die Messunsicherheit ist eine Funktion von Einflussgrössen der Übertragungsglieder. Jede Einflussgrösse wird als Einflusswert dargestellt. Ein bester Einflussschätzwert ist ein arithmetisches Mittel mehrerer Einflussgrössen. Um die Messunsicherheit zu bestimmen, erfolgt nach ISO/IEC Guide 98-3:2008-09 ein modellhaftes Vorgehen, indem zuerst Einflussgrössen der Übertragungsglieder festgestellt werden, und dann für jede festgestellte Einflussgrösse ein bester Einflussschätzwert und ein dem besten Einflussschätzwert beigeordneter Messunsicherheitsbeitrag berechnet wird.

Es ist allgemeiner Wunsch eines Benutzers des Messsystems, die Messunsicherheit, mit der eine physikalische Messgrösse vom Messsystem erfasst wird, zu kennen. Beispielsweise ist das Messsystem Teil einer Produktionsanlage für Industriegüter. Hier geschieht es häufig, dass die Produktionsanlage einzig aufgrund einer unbekannten Messunsicherheit überdimensioniert wird, oder dass bei der Produktion der Industriegüter eine unbekannte Messunsicherheit zu Schlechtteilen führt. Beide Male folgen aus der unbekannten Messunsicherheit Mehrkosten bei Investition und Produktion.

Um von der Messunsicherheit eines Messsystems Kenntnis zu erlangen ist jedoch ein modellhaftes Vorgehen mit Feststellung der relevanten Einflussgrössen der Übertragungsglieder und Berechnung der besten Einflussschätzwerte und der beigeordneten Messunsicherheiten notwendig. Häufig scheut der Benutzer eines Messsystems den zeitlichen und materiellen Aufwand bei einem solchen modellhaften Vorgehen. Ein Verfahren zum Anpassen eines Modells zur Bestimmung von Messunsicherheiten ist aus der US 2008/125982 bekannt.

Aufgabe der vorliegenden Erfindung ist es, ein Verfahren zur Ermittlung der Messunsicherheit eines Messsystems bereitzustellen, welches Verfahren geringen zeitlichen und materiellen Aufwand erfordert.

### Darstellung der Erfindung

Diese Aufgabe wird durch die Merkmale des unabhängigen Anspruchs gelöst.

Die Erfindung betrifft ein Verfahren zur Ermittlung der Messunsicherheit eines Messsystems; welches Messsystem eine physikalische Messgrösse erfasst; welches Messsystem mehrere Übertragungsglieder aufweist; welche Übertragungsglieder für die Erfassung der physikalischen Messgrösse eine Messkette bilden, wobei in der Messkette direkt benachbarte Übertragungsglieder in einer Ursache-Wirkung-Beziehung zueinander stehen; mit den Schritten: a) Einlesen von Informationen zur Identifikation der Übertragungsglieder der Messkette durch ein Computerprogrammprodukt; b) Einlesen von lesbaren Etiketten von Einflussgrössen der identifizierten Übertragungsglieder durch das Computerprogrammprodukt, und Feststellung einer Relevanz der Einflussgrössen der identifizierten Übertragungsglieder auf die Messunsicherheit des Messsystems durch das Computerprogrammprodukt; und c) Verwendung von als relevant festgestellten Einflussgrössen zur Berechnung der Messunsicherheit des Messsystems durch das Computerprogrammprodukt.

Die Patentanmelderin hat herausgefunden, dass sie als kommerzielle Anbieterin von Messsystemen ausreichend Expertenwissen hat, um einem Benutzer eines bestehenden Messsystems bei der Ermittlung der Messunsicherheit seines Messsystems zu helfen. Denn beim Benutzer wird eine Messkette oft aus vorhandenen Übertragungsgliedern zusammengestellt. Die Übertragungsglieder werden dabei aufgrund ihrer einfachen Verfügbarkeit ausgewählt. Wie gross die Messunsicherheit des Messsystems ist, ist dem Benutzer jedoch nicht bekannt.

Hier setzt die Erfindung ein. Im erfindungsgemässen Verfahren wird dem Benutzer das Expertenwissen der Anmelderin bereitgestellt. Für den Benutzer werden die Übertragungsglieder der von ihm zusammengestellten Messkette identifiziert und die Einflussgrössen der identifizierten Übertragungsglieder auf die Messunsicherheit des Messsystems festgestellt. Mit den festgestellten Einflussgrössen wird die Messunsicherheit des Messsystems berechnet.

Vorzugsweise wird für jede festgestellte Einflussgrösse ein einem besten Einflussschätzwert der festgestellten Einflussgrösse beigeordneter Messunsicherheitsbeitrag bereitgestellt. Die Messunsicherheit des Messsystems wird aus den bereitgestellten Messunsicherheitsbeiträgen berechnet. Für den Benutzer ist das erfinderische Verfahren mit geringem zeitlichen und materiellen Aufwand verbunden.

Die Schritte a) bis c) im erfinderischen Verfahren zur Ermittlung der Messunsicherheit eines Messsystems werden durch ein Computerprogrammprodukt ausgeführt.

### Kurze Beschreibung der Zeichnungen

Im Folgenden wird die Erfindung beispielhaft unter Beizug der Figuren näher erklärt. Es zeigen
- Fig. 1: eine Darstellung eines Messsystems mit mehreren Übertragungsgliedern;
- Fig. 2: ein Schema von Schritten beim Verfahren zur Ermittlung der Messunsicherheit des Messsystems nach Fig. 1;
- Fig. 3: eine Darstellung eines Rechensystems für ein Computerprogrammprodukt zur Durchführung des Verfahrens nach Fig. 2;
- Fig. 4: eine Darstellung einer ersten Ausführungsform des Rechensystems nach Fig. 3 zur Durchführung von Schritt a) des Verfahrens nach Fig. 2;
- Fig. 5: eine Darstellung einer zweiten Ausführungsform des Rechensystems nach Fig. 3 zur Durchführung von Schritt a) des Verfahrens nach Fig. 2;
- Fig. 6: Eine Darstellung eines ersten Ausführungsbeispiels einer im Schritt c) des Verfahrens nach Fig. 2 berechneten Messunsicherheit aus Messunsicherheitsbeiträgen;
- Fig. 7: Eine Darstellung eines zweiten Ausführungsbeispiels einer im Schritt c) des Verfahrens nach Fig. 2 berechneten Messunsicherheit aus Messunsicherheitsbeiträgen;
- Fig. 8: eine Darstellung der Anpassung der Leistung des Messsystems mit der im ersten Ausführungsbeispiel des Verfahrens nach Fig. 2 und 6 berechneten Messunsicherheit; und
- Fig. 9: eine Darstellung der Anpassung der Leistung des Messsystems mit der im zweiten Ausführungsbeispiel des Verfahrens nach Fig. 2 und 7 berechneten Messunsicherheit.

### Wege zur Ausführung der Erfindung

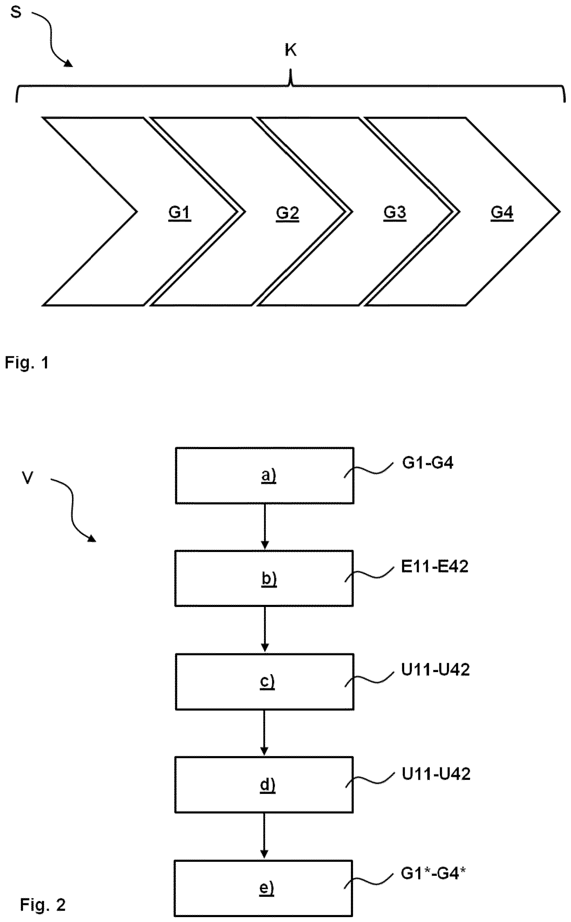

Fig. 1 zeigt ein Ausführungsbeispiel eines Messsystems S mit mehreren Übertragungsgliedern G1-G4. Wie einleitend dargelegt, dient das Messsystem S dazu, eine physikalische Messgrösse zu erfassen. Dazu bilden die Übertragungsglieder G1-G4 eine Messkette K. Direkt benachbarte Übertragungsglieder G1-G4 der Messkette K, beispielsweise die Übertragungsglieder G1 und G2, oder die Übertragungsglieder G2 und G3, stehen für die Erfassung der physikalischen Messgrösse in einer Ursache-Wirkung-Beziehung zueinander. Im Ausführungsbeispiel nach Fig. 1 sind vier Übertragungsglieder G1-G4 dargestellt, bei Kenntnis der Erfindung kann der Fachmann natürlich ein Messsystem mit mehr oder weniger Übertragungsgliedern realisieren.

Das Übertragungsglied G1 ist ein Sensor, wie ein Drucksensor, ein Beschleunigungssensor, ein Temperatursensor, usw. Der Sensor misst dementsprechend die physikalische Messgrösse Druck, Beschleunigung, Temperatur, usw. und erzeugt ein analoges Messsignal wie einen elektrischen Strom, eine elektrische Spannung, usw. Für einen Sensor in der Ausführungsform eines piezoelektrischen Sensors kann die physikalische Messgrösse mit einer Messfrequenz von bis zu 100 kHz gemessen werden. Auch ist bei einem piezoelektrischen Sensor das analoge Messsignal unter Normalbedingungen proportional zur physikalischen Messgrösse. Ein piezoelektrischer Sensor kann eine Kraft mit einer Messempfindlichkeit von einigen pC/N messen. Die Messempfindlichkeit ändert sich jedoch mit der Umgebungstemperatur und dem Alter des piezoelektrischen Sensors. Auch weist das analoge Messsignal eine Abweichung von der Proportionalität zur physikalischen Messgrösse auf, was als Linearität des piezoelektrischen Sensors bezeichnet wird. Schliesslich ist das analoge Messsignal nur mit einer Messgenauigkeit des piezoelektrischen Sensors reproduzierbar. Eine erste auf die Messunsicherheit U des Messsystems S relevante Einflussgrösse E11 des Übertragungsgliedes G1 ist eine "Temperaturabhängigkeit der Messempfindlichkeit des piezoelektrischen Sensors". Eine zweite auf die Messunsicherheit U des Messsystems S relevante Einflussgrösse E12 des Übertragungsgliedes G1 ist eine "altersbedingte Änderung der Messempfindlichkeit des piezoelektrischen Sensors". Eine dritte auf die Messunsicherheit U des Messsystems S relevante Einflussgrösse E13 des Übertragungsgliedes G1 ist die "Linearität des piezoelektrischen Sensors". Eine vierte auf die Messunsicherheit U des Messsystems S relevante Einflussgrösse E14 des Übertragungsgliedes G1 ist die "Reproduzierbarkeit des analogen Messsignals".

Das Übertragungsglied G2 ist ein Signalkabel, welches Signalkabel das analoge Messsignal vom Sensor zu einem elektrischen Verstärker überträgt. Bei piezoelektrischen Sensoren kann das analoge Messsignal eine Messfrequenz von bis zu 100 kHz haben und es kann eine elektrische Ladung von einigen pC sein. Eine Kabelimpedanz des Signalkabels ist hier wesentlich. Gerade wenn das Signalkabel nicht mit einem Wellenwiderstand abgeschlossen ist, ändert sich die Kabelimpedanz am Eingang des Signalkabels. Eine erste auf die Messunsicherheit U des Messsystems S relevante Einflussgrösse E21 des Übertragungsgliedes G2 ist eine "Länge des Signalkabels". Eine zweite auf die Messunsicherheit U des Messsystems S relevante Einflussgrösse E22 des Übertragungsgliedes G2 ist eine "Übertragungsfrequenz".

Das Übertragungsglied G3 ist der elektrische Verstärker, welcher elektrische Verstärker das übertragene analoge Messsignal empfängt und elektrisch verstärkt und zu einem digitalen Messsignal wandelt. Eine erste auf die Messunsicherheit U des Messsystems S relevante Einflussgrösse E31 des Übertragungsgliedes G3 ist eine "Messgenauigkeit des elektrischen Verstärkers". Eine zweite auf die Messunsicherheit U des Messsystems S relevante Einflussgrösse E32 des Übertragungsgliedes G3 ist ein "Übersprechen zwischen Eingangskanälen des elektrischen Verstärkers".

Das Übertragungsglied G4 ist eine Auswerteeinheit, welche Auswerteeinheit das digitale Messsignal auswertet. Die Auswerteeinheit weist einen Datenverarbeitungsprozessor, einen Datenspeicher und einen Bildschirm auf. Zur Auswertung kann das digitale Messsignal in ein im Datenverarbeitungsprozessor laufendes Computerprogrammprodukt geladen werden. Vom Computerprogrammprodukt kann das digitale Messsignal weiterverarbeitet werden. Das digitale Messsignal kann im Datenspeicher gespeichert werden. Auch kann das digitale Messsignal auf dem Bildschirm dargestellt werden. Eine erste auf die Messunsicherheit U des Messsystems S relevante Einflussgrösse E41 des Übertragungsgliedes G4 ist ein "Rundungsfehler bei der Weiterverarbeitung". Eine zweite auf die Messunsicherheit U des Messsystems S relevante Einflussgrösse E42 des Übertragungsgliedes G4 ist eine "Geschwindigkeit bei der Weiterverarbeitung".

Bei Kenntnis der vorliegenden Erfindung kann der Fachmann ein Messsystem mit anderen Übertragungsgliedern und anderen relevanten Einflussgrössen realisieren.

Fig. 2 ist ein Schema von Schritten a) bis e) beim Verfahren V zur Ermittlung der Messunsicherheit U des Messsystems S. Die Schritte a) bis c) sind erfindungswesentlich. Die weiteren Schritte d) und e) sind optional. Im Schritt a) erfolgt eine Identifizierung der Übertragungsglieder G1-G4 der Messkette K. Im Schritt b) findet eine Feststellung von Einflussgrössen E11-E42 der identifizierten Übertragungsglieder G1-G4 auf die Messunsicherheit U des Messsystems S statt. Im Schritt c) werden die festgestellten Einflussgrössen E11-E42 zur Berechnung der Messunsicherheit U des Messsystems S verwendet. Im Schritt d) wird mindestens ein identifiziertes Übertragungsglied G1-G4 mit von einem durchschnittlichen Messunsicherheitsbeitrag UØ abweichendem Messunsicherheitsbeitrag U11-U44 bestimmt. Und im Schritt e) wird mindestens ein Ersatz-Übertragungsglied G1*-G4* mit Ersatz-Messunsicherheitsbeitrag U11*-U44* für das mindestens eine bestimmtes Übertragungsglied G1-G4 ermittelt.

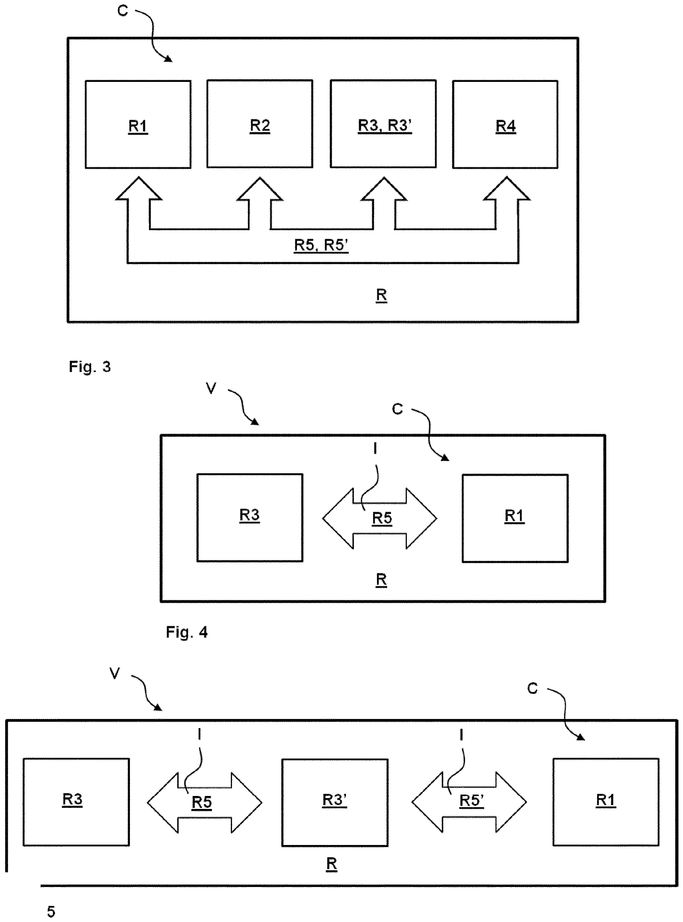

Fig. 3 zeigt ein Rechensystem R für ein Computerprogrammprodukt C zur Durchführung des Verfahrens V zur Ermittlung der Messunsicherheit U des Messsystems S. Das Rechensystem R weist als Bestandteile einen Datenverarbeitungsprozessor R1, einen Datenspeicher R2, mindestens eine Eingabeeinheit R3, R3', eine Ausgabeeinheit R4 und mindestens eine Kommunikationseinheit R5, R5' auf. Das Rechensystem R kann ein handelsüblicher Computer sein. Die Eingabeeinheit R3, R3' kann eine Computer-Tastatur, eine Computer-Maus, ein berührungsempfindlicher Bildschirm, eine Datenschnittstelle, usw. sein. Die Ausgabeeinheit R4 kann ein Computer-Bildschirm, ein berührungsempfindlicher Bildschirm, usw. sein. Die Kommunikationseinheit R5, R5' kommuniziert Daten zwischen den Bestandteilen des Rechensystems R. Die Kommunikationseinheit R5, R5' kann ein Netzwerk wie das Internet, ein Computer-Bus wie der Peripheral Component Interconnect Express (PCIe) Bus, usw. sein. Die Datenschnittstelle ist mit der Kommunikationseinheit R5, R5' in der Ausführungsform eines Netzwerks verbunden, sie kann im Netzwerk gemäss einem Netzwerkprotokoll wie dem Internet-Protokoll (IP), dem PCIe-Protokoll kommunizieren, und sie ist im Netzwerk über eine Netzwerkadresse aufrufbar.

Einzelne Bestandteile des Rechensystems R können beim Messsystem S des Benutzers angeordnet sein, sie können aber auch entfernt vom Messsystem S des Benutzers angeordnet sein. Unter "entfernt" wird im Sinne der Erfindung eine beliebig grosse Entfernung verstanden. Auch die Bestandteile des Rechensystems R können beliebig weit entfernt voneinander angeordnet sein. So können nur die Eingabeeinheit R3 und die Ausgabeeinheit R4 beim Benutzer angeordnet sein, während der Datenverarbeitungsprozessor R1 und der Datenspeicher R2 entfernt vom Benutzer angeordnet sind. Auch können die Bestandteile des Rechensystems R mehrmals vorhanden sein. So ist es möglich, dass beim Benutzer eine erste Eingabeeinheit R3 und eine erste Ausgabeeinheit R4 angeordnet sind, während entfernt vom Benutzer eine zweite Eingabeeinheit R3' angeordnet ist. Und es ist möglich, dass das Rechensystem R eine erste Kommunikationseinheit R5 und eine zweite Kommunikationseinheit R5' aufweist.

Das Computerprogrammprodukt C ist im Datenspeicher R2 speicherbar und aus dem Datenspeicher R2 in den Datenverarbeitungsprozessor R1 ladbar und zur Durchführung des Verfahrens V zur Ermittlung der Messunsicherheit U des Messsystems S im Datenverarbeitungsprozessor R1 ausführbar.

Zur Ausführung von Schritt a) werden digitale Informationsdaten I zur Identifikation der Übertragungsglieder G1-G4 in das Computerprogrammprodukt C eingelesen. Das Einlesen der digitalen Informationsdaten I aus dem Datenspeicher R2 erfolgt über die Eingabeeinheit R3 und die Kommunikationseinheit R5.

In der ersten Ausführungsform von Schritt a) nach Fig. 4 kann der Benutzer Informationen zur Identifikation der Übertragungsglieder G1-G4 der Messkette K über die Eingabeeinheit R3 in der Ausführungsform einer Computer-Tastatur eingeben, oder der Benutzer kann Informationen zur Identifikation der Übertragungsglieder G1-G4 der Messkette K auf der Eingabeeinheit R3 in der Ausführungsform eines berührungsempfindlichen Bildschirms durch Auswahl von darauf abgebildeten Übertragungsgliedern eingeben. Die an der Eingabeeinheit R3 eingegebenen Informationen werden dann als digitale Informationsdaten I über die Kommunikationseinheit R5 zum Datenverarbeitungsprozessor R1 kommuniziert und dort vom Computerprogrammprodukt C eingelesen.

In der zweiten Ausführungsform von Schritt a) nach Fig. 5 kann der Benutzer Informationen zur Identifikation der Übertragungsglieder G1-G4 der Messkette K über eine erste Eingabeeinheit R3 in der Ausführungsform einer Computer-Tastatur oder eines berührungsempfindlichen Bildschirms eines Computers eingeben. Der Computer ist in Fig. 5 figürlich nicht dargestellt. Die erste Eingabeeinheit R3 ist über den Computer mit der ersten Kommunikationseinheit R5 in der Ausführungsform eines Netzwerks verbunden. Die erste Eingabeeinheit R3 ruft über den Computer und die erste Kommunikationseinheit R5 die Netzwerkadresse der zweiten Eingabeeinheit R3' in der Ausführungsform einer Datenschnittstelle auf. Von der ersten Eingabeeinheit R3 werden die eingegebenen Informationen dann als digitale Informationsdaten I an die Netzwerkadresse der zweiten Eingabeeinheit R3' kommuniziert. Die an die zweite Eingabeeinheit R3' kommunizierten digitalen Informationsdaten I werden über die zweite Kommunikationseinheit R5 zum Datenverarbeitungsprozessor R1 kommuniziert und dort vom Computerprogrammprodukt C eingelesen.

Unter weiterer Bezugnahme auf Fig. 5 ist es auch möglich, dass in einer dritten Ausführungsform von Schritt a) das Computerprogrammprodukt C digitale Informationsdaten zur Identifikation der Übertragungsglieder G1-G4 der Messkette K ohne Interaktion des Benutzers selbsttätig einliest. Dazu weisen die Übertragungsglieder G1-G4 mindestens einen Informationsgeber wie ein Transducer Electronic Data Sheet (TEDS) gemäss dem Standard Institute of Electrical and Electronics Engineers (IEEE) 1451 auf. Der Informationsgeber ist in Fig. 5 nicht figürlich dargestellt. Der Informationsgeber ist ein Datenspeicher. Im Informationsgeber sind digitale Informationsdaten I der Übertragungsglieder G1-G4 gespeichert. Der Informationsgeber ist über mindestens eine erste Eingabeeinheit R3 in der Ausführungsform einer Datenschnittstelle mit der ersten Kommunikationseinheit R5 in der Ausführungsform eines Netzwerks verbunden. Das Computerprogrammprodukt C ist über die zweite Eingabeeinheit R3' in der Ausführungsform einer Datenschnittstelle mit der ersten Kommunikationseinheit R5 verbunden. Das Computerprogrammprodukt C ruft über die zweite Eingabeeinheit R3' und die erste Kommunikationseinheit R5 die Netzwerkadresse der mindesten einen ersten Eingabeeinheit R3 auf. Vom so aufgerufenen Informationsgeber werden die digitalen Informationsdaten I dann an die Netzwerkadresse der zweiten Eingabeeinheit R3' kommuniziert. Die an die zweite Eingabeeinheit R3' kommunizierten digitalen Informationsdaten I werden über die zweite Kommunikationseinheit R5' zum Datenverarbeitungsprozessor R1 kommuniziert und dort vom Computerprogrammprodukt C eingelesen.

Bei Kenntnis der vorliegenden Erfindung kann der Fachmann die vorgängig vorgestellten drei Ausführungsformen von Schritt a) miteinander kombiniert. So kann der Benutzer gemäss der ersten Ausführungsform von Schritt a) Informationen zur Identifikation der Übertragungsglieder G2-G4 über einen berührungslosen Bildschirm durch Auswahl von darauf abgebildeten Übertragungsgliedern eingeben, während das Computerprogrammprodukt C gemäss der dritten Ausführungsform von Schritt a) digitale Informationsdaten des Übertragungsgliedes G1 selbsttätig einliest.

Im Schritt b) stellt das Computerprogrammprodukt C für die identifizierten Übertragungsglieder G1-G4 Einflussgrössen E11-E42 auf die Messunsicherheit U des Messsystems S fest. Dazu hat das Computerprogrammprodukt C Zugriff auf den Datenspeicher R2 mit vorgängig ermittelten Einflussgrössen E11-E42 von Übertragungsgliedern G1-G4. Dabei wird zwischen relevanten und nichtrelevanten Einflussgrössen unterschieden. Relevant ist eine Einflussgrösse, wenn sie einen signifikanten Beitrag auf die Messunsicherheit U des Messsystems S ausübt. Vorzugsweise sind diejenigen Einflussgrössen relevant, welche Einflussgrössen die grössten Beträge an der Messunsicherheit U des Messsystems S haben, und welche Einflussgrössen in Summe einen Beitrag von mindestens 80% an der Messunsicherheit U des Messsystems S haben. Die Relevanz einer Einflussgrösse wird vorgängig ermittelt. Vorzugsweise werden bei der Feststellung der Einflussgrössen auf die Messunsicherheit U des Messsystems S nur relevante Einflussgrössen berücksichtigt. Vorzugsweise haben relevante Einflussgrössen eine lesbare Etikette mit der Angabe "relevant", während nichtrelevante Einflussgrössen eine lesbare Etikette mit der Angabe "nicht relevant" haben. Das Computerprogrammprodukt C kann die Etiketten lesen und durch Erkennung der Angaben auf den Etiketten die Relevanz der Einflussgrössen auf die Messunsicherheit U des Messsystems S feststellen.

Das Computerprogrammprodukt C stellt für jedes identifizierte Übertragungsglied G1-G4 mindestens eine dem identifizierten Übertragungsglied G1-G4 zugeordnete relevante Einflussgrösse E11-E42 fest und lädt sie aus dem Datenspeicher R2. Für das identifizierte Übertragungsglied G1 in der Ausführungsform eines piezoelektrischen Sensors lädt das Computerprogrammprodukt C die relevanten Einflussgrössen E11-E14 "Temperaturabhängigkeit der Messempfindlichkeit des piezoelektrischen Sensors", "altersbedingte Änderung der Messempfindlichkeit des piezoelektrischen Sensors", "Linearität des piezoelektrischen Sensors" sowie "Reproduzierbarkeit des analogen Messsignals" aus dem Datenspeicher R2. Für ein Signalkabel als identifiziertes Übertragungsglied G2 lädt das Computerprogrammprodukt C die relevanten Einflussgrössen E21, E22 "Länge des Signalkabels" und "Übertragungsfrequenz" aus dem Datenspeicher R2. Für einen elektrischen Verstärker als identifiziertes Übertragungsglied G3 lädt das Computerprogrammprodukt C die relevanten Einflussgrössen E31, E32 "Messgenauigkeit des elektrischen Verstärkers" und "Übersprechen zwischen Eingangskanälen des elektrischen Verstärkers" aus dem Datenspeicher R2. Für eine Auswerteeinheit als identifiziertes Übertragungsglied G4 lädt das Computerprogrammprodukt C die relevanten Einflussgrössen E41, E42 "Rundungsfehler bei der Weiterverarbeitung" und "Geschwindigkeit bei der Weiterverarbeitung" aus dem Datenspeicher R2. Aus dem Datenspeicher R2 geladene relevante Einflussgrössen E11-E42 werden über die Kommunikationseinheit R5 zum Datenverarbeitungsprozessor R1 kommuniziert und dort vom Computerprogrammprodukt C eingelesen.

Nun verwendet das Computerprogrammprodukt C im Schritt c) die festgestellten Einflussgrössen E11-E42 zur Berechnung der Messunsicherheit U des Messsystems S. Dazu sind im Datenspeicher R2 für die vorgängig ermittelten Einflussgrössen auch beste Einflussschätzwerte und den besten Einflussschätzwerten beigeordnete Messunsicherheitsbeiträge gespeichert. Im Datenspeicher R2 wird für jede Einflussgrösse ein dem besten Einflussschätzwert der Einflussgrösse beigeordneter Messunsicherheitsbeitrag bereitgestellt. Das Computerprogrammprodukt C lädt für jede festgestellte Einflussgrösse E11-E42 einen dem besten Einflussschätzwert der festgestellten Einflussgrösse E11-E42 beigeordneten Messunsicherheitsbeitrag U11-U42 aus dem Datenspeicher R2. Die aus dem Datenspeicher R2 geladenen Messunsicherheitsbeiträge U11-U42 werden über die Kommunikationseinheit R5 zum Datenverarbeitungsprozessor R1 kommuniziert und dort vom Computerprogrammprodukt C eingelesen.

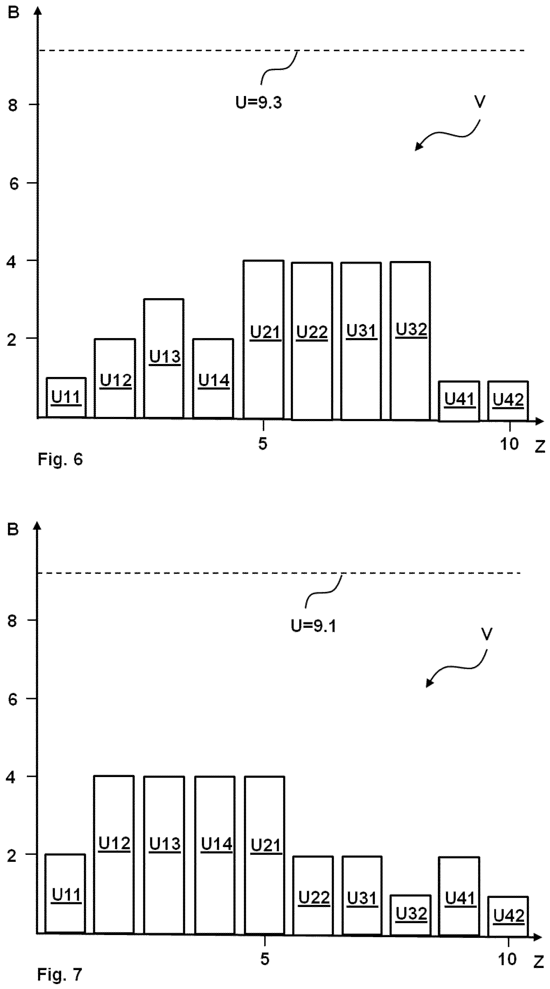

Das Computerprogrammprodukt C stellt die berechnete Messunsicherheit U des Messsystems S auf der Ausgabeeinheit R4 dar. Wie in den beiden Ausführungsbeispielen nach Fig. 6 und 7 gezeigt gibt eine Ordinate einen Betrag B der Messunsicherheitsbeiträge U11-U42 wieder, und eine Abszisse zeigt eine Anzahl A der Messunsicherheitsbeiträge U11-U42 an. Das Computerprogrammprodukt C berechnet den Messunsicherheit U des Messsystems S, indem es eine Summe der Quadrate der Messunsicherheitsbeiträge U11-U42 bildet und eine Quadratwurzel aus der gebildeten Summe zieht.

Im ersten Ausführungsbeispiel nach Fig. 6 beträgt die Messunsicherheit U = 9.3 für zehn Messunsicherheitsbeiträge U11-U42.

Im zweiten Ausführungsbeispiel nach Fig. 7 beträgt die Messunsicherheit U = 9.1 für zehn Messunsicherheitsbeiträge U11-U42.

Im Schritt d) bestimmt das Computerprogrammprodukt C mindestens ein identifiziertes Übertragungsglied G1-G4 mit einem extremen Messunsicherheitsbeitrag U11-U42. Im Sinne der Erfindung ist ein Messunsicherheitsbeitrag U11-U42 extrem, wenn er kleiner oder grösser als mindestens einer der anderen Messunsicherheitsbeiträge U11-U42 ist.

Im ersten Ausführungsbeispiel nach Fig. 6 einer berechneten Messunsicherheit U eines Messsystems S sind sieben Messunsicherheitsbeiträge U11, U21, U22, U31, U32, U41, U42 extrem, wobei die drei Messunsicherheitsbeiträge U11, U41, U42 am kleinsten sind, und die vier Messunsicherheitsbeiträge U21, U22, U31, U32 am grössten sind.

Im zweiten Ausführungsbeispiel einer berechneten Messunsicherheit U eines Messsystems S nach Fig. 7 sind sechs Messunsicherheitsbeiträge U12, U13, U14, U21, U32, U42 extrem, wobei die zwei Messunsicherheitsbeiträge U32, U42 am kleinsten sind, und die vier Messunsicherheitsbeiträge U12, U13, U14, U21 am grössten sind.

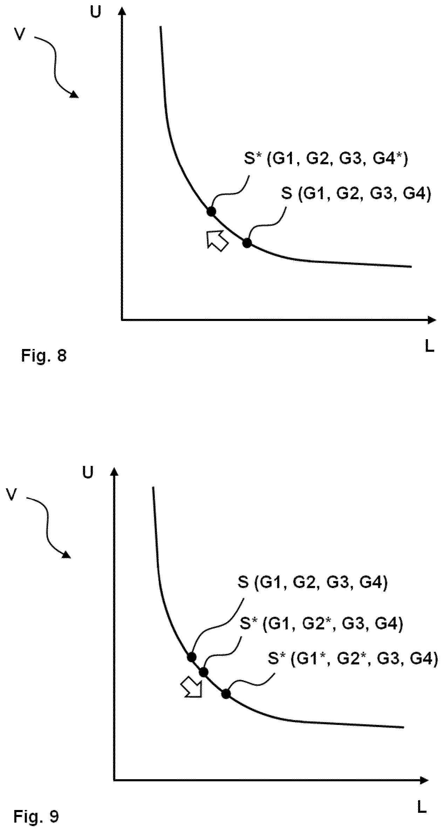

In Fig. 8 und 9 sind zwei Ausführungsbeispiele einer Messunsicherheit U eines Messsystems S als Funktion einer Leistung L eines Messsystems S dargestellt. Eine Ordinate gibt die Messunsicherheit U des Messsystems S wieder, und eine Abszisse zeigt die Leistung L des Messsystems S an. Die Messunsicherheit U des Messsystems S ist ein mehrdimensionales Kennfeld und hängt von Kenngrössen der Leistung L des Messsystems S wie Leistungsfähigkeit, Verfügbarkeit, Anzahl der Wartungszyklen, Wartungsqualität, Beschaffungspreis, Umgebungseinflüsse, usw. ab. Die Messunsicherheit U des Messsystems S mit den Übertragungsgliedern G1-G4 ist als Punkt S(G1, G2, G3, G4) dargestellt.

Durch die Darstellung der Messunsicherheit U in den Ausführungsbeispielen nach Fig. 6 bis 9 nimmt der Benutzer nicht nur Kenntnis von der Messunsicherheit U des Messsystems S, sondern er kann auch Messunsicherheit U des Messsystems S in Funktion der Leistung L des Messsystems S beurteilen.

Für das eingangs vorgestellte Beispiel eines Messsystems als Teil einer Produktionsanlage für Industriegüter, wo die Produktionsanlage aufgrund einer unbekannten Messunsicherheit überdimensioniert ist, zeigt Fig. 6 ein erstes Ausführungsbeispiel der für das Messsystem S berechneten Messunsicherheit U und Fig. 8 ein erstes Ausführungsbeispiel der berechneten Messunsicherheit U als Funktion der Leistung L des Messsystems S. Der Benutzer erkennt, dass die Messunsicherheitsbeiträge U41, U42 für die relevanten Einflussgrössen E41, E42 "Rundungsfehler bei der Weiterverarbeitung" und "Geschwindigkeit bei der Weiterverarbeitung" am kleinsten sind. Diese Erkenntnis führt zur Schlussfolgerung, dass das bestimmte identifizierte Übertragungsglied G4 als Auswerteeinheit überdimensioniert ist. Um Kosten bei der Investition zu sparen, ersetzt das Computerprogrammprodukt C das bestimmte identifizierte Übertragungsglied G4 durch ein Ersatz-Übertragungsglied G4*, welches Ersatz-Übertragungsglied G4* vergleichsweise grössere Ersatz-Messunsicherheitsbeiträge U41*, U42* aufweist.

Und für das ebenfalls eingangs vorgestellte Beispiel eines Messsystems als Teil einer Produktionsanlage für Industriegüter, wo die Produktion der Industriegüter aufgrund einer unbekannten Messunsicherheit zu Schlechtteilen führt, zeigt Fig. 7 ein zweites Ausführungsbeispiel der für das Messsystem S berechneten Messunsicherheit U und Fig. 9 ein zweites Ausführungsbeispiel der berechneten Messunsicherheit U als Funktion der Leistung L des Messsystems S. Der Benutzer erkennt, dass die Messunsicherheitsbeiträge U12-U14, U21 für die relevanten Einflussgrössen E12 "altersbedingte Änderung der Messempfindlichkeit des piezoelektrischen Sensors", E13 "Linearität des piezoelektrischen Sensors", E14 "Reproduzierbarkeit des analogen Messsignals" und E21 "Länge des Signalkabels" am grössten sind. Diese Erkenntnis führt nun zur Schlussfolgerung, dass die bestimmten Übertragungsglieder G1, G2 überdurchschnittliche Messunsicherheitsbeiträge U12-U14, U21 aufweisen. Um die Anzahl der Schlechtteile und somit auch die Kosten bei der Produktion zu senken, ersetzt das Computerprogrammprodukt C mindestens ein bestimmtes Übertragungsglied G1, G2 durch ein Ersatz-Übertragungsglied G1*, G2*, welches Ersatz-Übertragungsglied G1*, G2* einen vergleichsweise kleineren Ersatz-Messunsicherheitsbeitrag U12*-U14*, U21* aufweist.

Im Schritt e) ermittelt das Computerprogrammprodukt C mindestens ein Ersatz-Übertragungsglied G1*-G4* mit einem Ersatz-Messunsicherheitsbeitrag U11*-U42* für das mindestens eine bestimmte identifizierte Übertragungsglied G1-G4. Dazu sind im Datenspeicher R2 digitale Informationsdaten I, I* von Übertragungsgliedern G1-G4, G1*-G4* gespeichert. Die digitalen Informationsdaten I, I* sind wesentliche technische Merkmale von Übertragungsgliedern G1-G4, G1*-G4*. Die wesentlichen technischen Merkmale kennzeichnen die Übertragungsglieder G1-G4, G1*-G4*. Vorzugsweise sind im Datenspeicher R2 wesentliche technische Merkmale von sehr vielen Übertragungsgliedern G1-G4, G1*-G4* gespeichert. So wird sichergestellt, dass für ein bestimmtes identifiziertes Übertragungsglied G1-G4 mindestens ein gleichwertiges Ersatz-Übertragungsglied G1*-G4* gespeichert ist. Im Sinne der Erfindung ist ein Ersatz-Übertragungsglied G1*-G4* gleichwertig, wenn es in den wesentlichen Merkmalen mit dem bestimmten identifizierten Übertragungsglied G1-G4 übereinstimmt und wenn sich vom bestimmten identifizierten Übertragungsglied G1-G4 nur in mindestens einem Messunsicherheitsbeitrag U11-U42 unterscheidet.

So ist das Übertragungsglied G1 des Messsystems S ein Sensor und für die Ausführungsform eines piezoelektrischen Sensors sind die wesentlichen technischen Merkmale der Messbereich, die Messempfindlichkeit, die Messgenauigkeit, usw.

Das Übertragungsglieder G2 des Messsystems S ist ein Signalkabel. Die wesentlichen technischen Merkmale des Signalkabels sind die Kabelimpedanz am Eingang des Signalkabels, die Länge des Signalkabels, usw.

Das Übertragungsglied G3 des Messsystems S ist ein elektrischer Verstärker. Die wesentlichen Merkmale des elektrischen Verstärkers sind die Messgenauigkeit des elektrischen Verstärkers, das Übersprechen zwischen Eingangskanälen des elektrischen Verstärkers, usw.

Und das Übertragungsglied G4 des Messsystems S ist eine Auswerteeinheit. Die wesentlichen technischen Merkmale der Auswerteeinheit sind die Genauigkeit bei der Weiterverarbeitung, die "Geschwindigkeit bei der Weiterverarbeitung, usw.

Anhand der wesentlichen technischen Merkmale der im Datenspeicher gespeicherten Übertragungsglieder G1-G4, G1*-G4* kann das Computerprogrammprodukt C im Datenspeicher R2 mindestens ein Ersatz-Übertragungsglied G1*-G4* finden. Dazu vergleicht das Computerprorammprodukt C digitale Informationen I des bestimmten Übertragungsgliedes G1-G4 mit digitalen Informationen I* von im Datenspeicher R2 gespeicherten Ersatz-Übertragungsgliedern G1*-G4*. Das Computerprogrammprodukt C stellt für das bestimmte Übertragungsglied G1-G4 mindestens ein gleichwertiges Ersatz-Übertragungsglied G1*-G4* fest und lädt digitale Informationen I* des Ersatz-Übertragungsgliedes G1*-G4* aus dem Datenspeicher R2.

Mit den digitalen Informationen I* des Ersatz-Übertragungsgliedes G1*-G4* wird das Ersatz-Übertragungsglied G1*-G4* physisch bereitgestellt, beispielsweise durch Beschaffung, und das bestimmte Übertragungsglied G1-G4 wird durch das physisch bereitgestellte Ersatz-Übertragungsglied G1*-G4* im Messsystem S ersetzt.

Im ersten Ausführungsbeispiel nach Fig. 8 wird das Messsystem S (G1, G2, G3, G4) durch das Ersatz-Übertragungsglied G4* zu einem Ersatz-Messsystem S* (G1, G2, G3, G4*) ersetzt. Die Messunsicherheit U des Ersatz-Messsystems S* steigt aufgrund der vergleichsweise grösseren Ersatz-Messunsicherheitsbeiträge U41*-U44*. Der Anstieg der Messunsicherheit U vom Messsystem S (G1, G2, G3, G4) zum Ersatz-Messsystem S* (G1, G2, G3, G4*) ist in Fig. 8 durch einen Pfeil gekennzeichnet.

Im zweiten Ausführungsbeispiel nach Fig. 9 wird im Messsystem S (G1, G2, G3, G4) zuerst das Übertragungsglied G2 durch das Ersatz-Übertragungsglied G2* zu einem ersten Ersatz-Messsystem S* (G1, G2*, G3, G4) ersetzt. Und das erste Ersatz-Messsystem S* wird durch den Ersatz des Übertragungsgliedes G1 durch das Ersatz-Übertragungsglied G1* zu einem zweiten Ersatz-Messsystem S* (G1*, G2*, G3, G4) ersetzt. Die Messunsicherheit U vom Ersatz-Messsystem S* sinkt aufgrund der vergleichsweise kleineren Ersatz-Messunsicherheitsbeiträge U12*, U21*. Das Absinken der Messunsicherheit U vom Messsystem S (G1, G2, G3, G4) zum ersten Ersatz-Messsystem S* (G1, G2*, G3, G4) und von dort zum zweiten Ersatz-Messsystem S* (G1*, G2*, G3, G4) ist in Fig. 9 durch einen Pfeil gekennzeichnet.

### Bezugszeichenliste

- a): Identifizierung der Übertragungsglieder der Messkette
- b): Feststellung der Einflussgrössen der identifizierten Übertragungsglieder auf die Messunsicherheit des Messsystems
- c): Verwendung der festgestellten Einflussgrössen zur Berechnung der Messunsicherheit des Messsystems
- d): Bestimmung eines identifizierten Übertragungsgliedes mit einem extremen Messunsicherheitsbeitrag
- e): Ermittlung eines Ersatz-Übertragungsgliedes mit Ersatz-Messunsicherheitsbeitrag für das bestimmte identifizierte Übertragungsglied
- A: Anzahl
- B: Betrag
- C: Computerprogrammprodukt
- E11-E42: festgestellte Einflussgrösse
- G1-G4: Übertragungsglied
- G1*-G4*: Ersatz-Übertragungsglied
- I, I*: digitale Informationsdaten
- K: Messkette
- L: Leistung
- R: Rechensystem
- S: Messsystem
- S*: Ersatz-Messsystem
- U: Messunsicherheit
- U11-U42: Messunsicherheitsbeitrag
- U11*-U42*: Ersatz-Messunsicherheitsbeitrag
- V: Verfahren
- R1: Datenverarbeitungsprozessor
- R2: Datenspeicher
- R3, R3': Eingabeeinheit
- R4: Ausgabeeinheit
- R5, R5': Kommunikationseinheit

## Patentansprüche

1. Von einem Rechensystem (R) ausgeführtes Verfahren (V) zur Ermittlung der Messunsicherheit (U) eines Messsystems (S); welches Messsystem (S) eine physikalische Messgrösse erfasst; welches Messsystem (S) mehrere Übertragungsglieder (G1-G4) aufweist; und welche Übertragungsglieder (G1-G4) für die Erfassung der physikalischen Messgrösse eine Messkette (K) bilden, wobei ein Übertragungsglied (G1) ein Sensor ist, ein Übertragungsglied (G2) ein Signalkabel ist, ein Übertragungsglied (G3) ein elektrischer Verstärker ist und ein Übertragungsglied (G4) eine Auswerteeinheit ist, wobei in der Messkette (K) direkt benachbarte Übertragungsglieder (G1-G4) in einer Ursache-Wirkung-Beziehung zueinander stehen; und wobei das Rechensystem (R) einen Datenverarbeitungsprozessor (R1) und ein Computerprogrammprodukt (C) aufweist, welches Computerprogrammprodukt (C) zur Durchführung des Verfahrens im Datenverarbeitungsprozessor (R1) ausführbar ist; bestehend aus den Schritten:
a) Eingeben von Informationen zur Identifikation der Übertragungsglieder (G1-G4) der Messkette (K) an einer Eingabeeinheit (R3) und Kommunikation der eingegebenen Informationen als digitale Informationsdaten (I) über mindestens eine Kommunikationseinheit (R5, R5') zum Datenverarbeitungsprozessor (R1) oder
Aufrufen eines digitalen Informationsgebers mit darin gespeicherten digitalen Informationsdaten (I) der Übertragungsglieder (G1-G4) der Messkette (K) und Kommunikation der eingegebenen Informationen als digitale Informationsdaten (I) über mindestens eine Kommunikationseinheit (R5, R5') zum Datenverarbeitungsprozessor (R1);
Einlesen der digitalen Informationsdaten (I) durch das Computerprogrammprodukt (C);
b) Zugreifen auf einen Datenspeicher (R2) des Rechensystems (R) mit im Datenspeicher (R2) gespeicherten vorgängig ermittelte Einflussgrössen von Übertragungsgliedern (G1-G4) durch das Computerprogrammprodukt (C);
Einlesen von lesbaren Etiketten von Einflussgrössen (E11-E42) der identifizierten Übertragungsglieder (G1-G4) durch das Computerprogrammprodukt (C), und
Feststellung einer Relevanz der Einflussgrössen (E11-E42) der identifizierten Übertragungsglieder (G1-G4) auf die Messunsicherheit (U) des Messsystems (S) durch das Computerprogrammprodukt (C), in dem das Computerprogrammprodukt (C) für jedes identifizierte Übertragungsglied (G1-G4) mindestens eine dem identifizierten Übertragungsglied (G1-G4) zugeordnete relevante Einflussgrösse (E11-E42) feststellt, wobei diejenigen Einflussgrössen (E11-E42) relevant sind, welche Einflussgrössen (E11-E42) die grössten Beträge an der Messunsicherheit (U) des Messsystems (S) haben und welche Einflussgrössen (E11-E42) in Summe einen Beitrag von mindestens 80% an der Messunsicherheit (U) des Messsystems (S) haben; und dass das Computerprogrammprodukt (C) die festgestellte Einflussgrösse (E11-E42) aus dem Datenspeicher (R2) lädt; und
c) Verwendung von als relevant festgestellten Einflussgrössen (E11-E42) zur Berechnung der Messunsicherheit (U) des Messsystems (S) durch das Computerprogrammprodukt (C).

2. Verfahren (V) nach Anspruch 1, **gekennzeichnet durch** einen Schritt: d) Bestimmung mindestens eines identifizierten Übertragungsgliedes (G1-G4) mit einem extremen Messunsicherheitsbeitrag (U11-U42), welcher extreme Messunsicherheitsbeitrag (U11-U42) kleiner oder grösser als mindestens einer der anderen Messunsicherheitsbeiträge (U11-U42) ist.

3. Verfahren (V) nach Anspruch 2, **gekennzeichnet durch** einen Schritt: e) Ermittlung mindestens eines Ersatz-Übertragungsgliedes (G1*-G4*) mit einem Ersatz-Messunsicherheitsbeitrag (U11*-U42*) für das mindestens eine bestimmte identifizierte Übertragungsglied (G1-G4).

4. Verfahren (V) nach Anspruch 3, **dadurch gekennzeichnet dass** das ermittelte Ersatz-Übertragungsglied (G1*-G4*) physisch bereitgestellt wird; und dass bestimmte Übertragungsglied (G1-G4) durch das physisch bereitgestellte Ersatz-Übertragungsglied (G1*-G4*) im Messsystem (S) ersetzt wird.

5. Verfahren (V) nach Anspruch 3, **dadurch gekennzeichnet dass** die berechneten Messunsicherheit (U) auf einer Ausgabeeinheit (R4) dargestellt wird.

6. Computerprogrammprodukt (C) zur Durchführung des Verfahrens (V) nach einem der Ansprüche 1 bis 5, welches Computerprogrammprodukt (C) in den Datenverarbeitungsprozessor (R1) des Rechensystems (R) ladbar ist, **dadurch gekennzeichnet, dass** das Computerprogrammprodukt (C) die Schritte a) bis c) ausführt.

7. Computerprogrammprodukt (C) nach Anspruch 6, **dadurch gekennzeichnet, dass** das Computerprogrammprodukt (C) zur Ausführung von Schritt a) digitale Informationsdaten (I) zur Identifikation der Übertragungsglieder (G1-G4) der Messkette (K) einliest; dass das Rechensystem (R) eine Eingabeeinheit (R3) und eine Kommunikationseinheit (R5) aufweist; dass Informationen zur Identifikation der Übertragungsglieder (G1-G4) der Messkette (K) über die Eingabeeinheit (R3) eingebbar sind; und dass die Kommunikationseinheit (R5) an der Eingabeeinheit (R3) eingegebene Informationen als digitale Informationsdaten an den Datenverarbeitungsprozessor (R1) kommuniziert.

8. Computerprogrammprodukt (C) nach Anspruch 6, **dadurch gekennzeichnet, dass** das Computerprogrammprodukt (C) zur Ausführung von Schritt a) digitale Informationsdaten (I) zur Identifikation der Übertragungsglieder (G1-G4) der Messkette (K) einliest; dass das Rechensystem (R) eine erste Eingabeeinheit (R3), eine zweite Eingabeeinheit (R3'), eine erste Kommunikationseinheit (R5) und eine zweite Kommunikationseinheit (R5') aufweist; dass die erste Kommunikationseinheit (R5) ein Netzwerk ist; dass jede Eingabeeinheit (R3, R3') mit der ersten Kommunikationseinheit (R5) verbunden ist; dass Informationen zur Identifikation der Übertragungsglieder (G1-G4) der Messkette (K) über die erste Eingabeeinheit (R3) eingebbar sind; dass die erste Eingabeeinheit (R3) über die erste Kommunikationseinheit (R5) eine Netzwerkadresse der zweiten Eingabeeinheit (R3') aufruft und eingegebene Informationen als digitale Informationsdaten (I) an die aufgerufene zweite Eingabeeinheit (R3') kommuniziert; und dass die zweite Kommunikationseinheit (R5') an die zweite Eingabeeinheit (R3') kommunizierte digitale Informationen (I) an den Datenverarbeitungsprozessor (R1) kommuniziert.

9. Computerprogrammprodukt (C) nach Anspruch 6, **dadurch gekennzeichnet, dass** das Computerprogrammprodukt (C) zur Ausführung von Schritt a) digitale Informationsdaten zur Identifikation der Übertragungsglieder (G1-G4) der Messkette (K) einliest; dass das Rechensystem (R) mindestens eine erste Eingabeeinheit (R3), eine zweite Eingabeeinheit (R3'), eine erste Kommunikationseinheit (R5) und eine zweite Kommunikationseinheit (R5') aufweist; dass die erste Kommunikationseinheit (R5) ein Netzwerk ist; dass jede Eingabeeinheit (R3, R3') mit der ersten Kommunikationseinheit (R5) verbunden ist; dass die Übertragungsglieder (G1-G4) mindestens einen Informationsgeber aufweisen; dass der Informationsgeber digitale Informationsdaten (I) der Übertragungsglieder (G1-G4) speichert; dass der Informationsgeber über die erste Eingabeeinheit (R3) mit der ersten Kommunikationseinheit (R5) verbunden ist; dass das Computerprogrammprodukt (C) im Netzwerk die Netzwerkadresse der ersten Eingabeeinheit (R3) aufruft; dass der so aufgerufene Informationsgeber digitale Informationsdaten (I) an die Netzwerkadresse der Eingabeeinheit (R3) kommuniziert; und dass die Kommunikationseinheit (R5) an die zweite Eingabeeinheit (R3) kommunizierten digitale Informationen (I) an den Datenverarbeitungsprozessor (R1) kommuniziert.

10. Computerprogrammprodukt (C) nach einem der Ansprüche 6 bis 9, **dadurch gekennzeichnet, dass** das Rechensystem (R) einen Datenspeicher (R2) aufweist; dass im Datenspeicher (R2) für vorgängig ermittelte Einflussgrössen von Übertragungsgliedern (G1-G4) beste Einflussschätzwerte und den besten Einflussschätzwerten beigeordnete Messunsicherheitsbeiträge (U11-U42) gespeichert sind; dass das Computerprogrammprodukt (C) zur Ausführung von Schritt c) für jede festgestellte Einflussgrösse (E11-E42) einen dem besten Einflussschätzwert der festgestellten Einflussgrösse (E11-E42) beigeordneten Messunsicherheitsbeitrag (U11-U42) aus dem Datenspeicher (R2) lädt; und dass das Computerprogrammprodukt (C) die Messunsicherheit (U) des Messsystems (S) berechnet, indem es eine Summe der Quadrate der Messunsicherheitsbeiträge (U11-U42) bildet und eine Quadratwurzel aus der gebildeten Summe zieht.

11. Computerprogrammprodukt (C) nach Anspruch 10, **dadurch gekennzeichnet, dass** das Computerprogrammprodukt zur Ausführung eines Schrittes d) mindestens ein identifiziertes Übertragungsglied (G1-G4) mit einem extremen Messunsicherheitsbeitrag (U11-U42) bestimmt, welcher extreme Messunsicherheitsbeitrag (U11-U42) kleiner oder grösser als mindestens einer der anderen Messunsicherheitsbeiträge (U11-U42) ist.

12. Computerprogrammprodukt (C) nach Anspruch 11, **dadurch gekennzeichnet, dass** das Rechensystem (R) einen Datenspeicher (R2) aufweist; dass im Datenspeicher (R2) digitale Informationsdaten (I*) von Ersatz-Übertragungsgliedern (G1*-G4*) gespeichert sind, wobei ein Ersatz-Übertragungsglied (G1*-G4*) gleichwertig ist, wenn es in wesentlichen Merkmalen mit dem bestimmten identifizierten Übertragungsglied (G1-G4) übereinstimmt und wenn es sich vom bestimmten Übertragungsglied (G1-G4) nur in mindestens einem Messunsicherheitsbeitrag (U11-U42) unterscheidet; und dass das Computerprogrammprodukt (C) digitale Informationen (I) des bestimmten Übertragungsgliedes (G1-G4) mit digitalen Informationen (I*) von im Datenspeicher (R2) gespeicherten Ersatz-Übertragungsgliedern (G1*-G4*) vergleicht.

13. Computerprogrammprodukt (C) nach Anspruch 12, **dadurch gekennzeichnet, dass** das Computerprogrammprodukt (C) zur Ausführung eines Schrittes e) feststellt, wenn ein Ersatz-Übertragungsglied (G1*-G4*) mit dem bestimmten Übertragungsglied (G1-G4) gleichwertig ist; und dass das Computerprogrammprodukt (C) digitale Informationen (I) vom festgestellten Ersatz-Übertragungsglied (G1*-G4*) aus dem Datenspeicher (R2) lädt.

## Claims

1. A method (V) executed by a computer system (R) for determining the measurement uncertainty (U) of a measuring system (S); which measuring system (S) detects a physical measurement variable; wherein said measuring system (S) comprises a plurality of transmission links (G1-G4); and which transmission links (G1-G4) form a measuring chain (K) for detecting the physical measurement variable, wherein a transmission element (G1) is a sensor, a transmission element (G2) is a signal cable, a transmission element (G3) is an electric amplifier and a transmission element (G4) is an evaluation unit, wherein directly adjacent transmission links (G1-G4) are in a cause-and-effect relationship to one another in the measuring chain (K); and wherein the computer system (R) comprises a data processing processor (R1) and a computer program product (C), which computer program product (C) is executable in the data processing processor (R1) for carrying out the method; **characterized by** the steps of:
a) input of information for identifying the transmission links (G1-G4) of the measuring chain (K) at an input unit (R3) and communication of the input information as digital information data (I) via at least one communication unit (R5, R5') to the data processing processor (R1) or
calling up a digital information carrier with digital information data (I) of the transmission elements (G1-G4) of the measuring chain (K) stored therein and communicating the input information as digital information data (I) to the data processing processor (R1) via at least one communication unit (R5, R5');
reading the digital information data (I) by the computer program product (C);
b) accessing a data memory (R2) of the computer system (R) by the computer program product (C) with predetermined influencing variables of transmission links (G1-G4) stored in the data memory (R2);
reading in legible labels of influencing variables (E11-E42) of the identified transmission links (G1-G4) by the computer program product (C), and
determining a relevance of the influencing variables (E11-E42) of the identified transmission links (G1-G4) for the measurement uncertainty (U) of the measuring system (S) by the computer program product (C); in that the computer program product (C) determines for each identified transmission link (G1-G4) at least one relevant influencing variable (E11-E42) attributed to the identified transmission link (G1-G4), wherein those influencing variables (E11-E42) are relevant, which influencing variables (E11-E42) have the largest contributions to the measurement uncertainty (U) of the measuring system (S) and which influencing variables (E11-E42) have a total contribution of at least 80% to the measurement uncertainty (U) of the measuring system (S); and that the computer program product (C) loads the determined influence quantity (E11-E42) from the data memory (R2; and
c) using influencing variables (E11-E42) found to be relevant for calculating the measurement uncertainty (U) of the measuring system (S) by the computer program product (C).

2. The method (V) according to claim 1, **characterized by** a step: d) determining at least one identified transmission link (G1-G4) with an important measurement uncertainty contribution (U11-U42), which important measurement uncertainty contribution (U11-U42) is smaller or higher than at least one of the other measurement uncertainty contributions (U11-U42).

3. The method (V) according to claim 2, **characterized by** a step: e) determining at least one replacement transmission link (G1*-G4*) having a replacement measurement uncertainty contribution (U11*-U42*) for the at least one particular identified transmission link (G1-G4).

4. The method (V) according to claim 3, **characterized in that** the determined replacement transmission link (G1*-G4*) is physically provided; and **in that** the particular transmission link (G1-G4) is replaced in the measuring system (S) by the physically provided replacement transmission link (G1*-G4*).

5. The method (V) according to claim 3, **characterized in that** the calculated measurement uncertainty (U) is displayed on an output unit (R4).

6. A computer program product (C) for performing the method according to any of the claims 1 to 5, which computer program product (C) is loadable in a data processing processor (R1) of a computer system (R), **characterized in that** the computer program product (C) carries out steps a) to c).

7. The computer program product (C) according to claim 6, **characterized in that** for executing step a) the computer program product (C) reads in digital information data (I) for identifying the transmission links (G1-G4) of the measuring chain (K); the computer system (R) comprises an input unit (R3) and a communication unit (R5); information for identifying the transmission links (G1-G4) of the measuring chain (K) can be entered via the input unit (R3); and **in that** the communication unit (R5) communicates information entered at the input unit (R3) as digital information data to the data processing processor (R1).

8. The computer program product (C) according to claim 6, **characterized in that** for executing step a) the computer program product (C) reads in digital information data (I) for identifying the transmission links (G1-G4) of the measuring chain (K); the computer system (R) comprises a first input unit (R3), a second input unit (R3'), a first communication unit (R5) and a second communication unit (R5'); the first communication unit (R5) is a network; each input unit (R3, R3') is connected to the first communication unit (R5); information for identifying the transmission links (G1-G4) of the measuring chain (K) can be entered via the first input unit (R3); the first input unit (R3) calls a network address of the second input unit (R3') via the first communication unit (R5) and communicates input information as digital information data (I) to the second input unit (R3') called; and **in that** the second communication unit (R5') communicates digital information (I) communicated to the second input unit (R3') to the data processing processor (R1).

9. The computer program product (C) according to claim 6, **characterized in that** for executing step a) the computer program product (C) reads in digital information data for identifying the transmission links (G1-G4) of the measuring chain (K); the computer system (R) comprises at least a first input unit (R3), a second input unit (R3'), a first communication unit (R5) and a second communication unit (R5'); the first communication unit (R5) is a network; each input unit (R3, R3') is connected to the first communication unit (R5); the transmission links (G1-G4) comprise at least one information carrier; the information carrier stores digital information data (I) of the transmission links (G1-G4); the information carrier is connected to the first communication unit (R5) via the first input unit (R3); the computer program product (C) calls the network address of the first input unit (R3) in the network; the information carrier called in this way communicates digital information data (I) to the network address of the input unit (R3); and **in that** the communication unit (R5) communicates digital information (I) communicated to the second input unit (R3) to the data processing processor (R1).

10. The computer program product (C) according to any of the claims 6 to 9, **characterized in that** the computer system (R) comprises a data memory (R2); wherein for predetermined influencing variables of transmission links (G1-G4) best influence estimates and measurement uncertainty contributions (U11-U42) associated with the best influence estimates are stored in the data memory (R2); for carrying out step c) the computer program product (C) retrieves for each determined influencing variable (E11-E42) a measurement uncertainty contribution (U11-U42) associated with the best influence estimate of the determined influencing variable (E11-E42) from the data memory (R2); and **in that** the computer program product (C) calculates the measurement uncertainty (U) of the measuring system (S) by summing up the squares of the measurement uncertainty contributions (U11-U42) and calculating a square root of the sum.

11. The computer program product (C) according to claim 10, **characterized in that** for carrying out a step d) the computer program product determines at least one identified transmission link (G1-G4) that has an important measurement uncertainty contribution (U11-U42), which important measurement uncertainty contribution (U11-U42) is smaller or higher than at least one of the other measurement uncertainty contributions (U11-U42).

12. The computer program product (C) according to claim 11, **characterized in that** the computer system (R) comprises a data memory (R2); wherein digital information data (I*) of replacement transmission links (G1*-G4*) are stored in the data memory (R2), wherein a replacement transmission link (G1*-G4*) is equivalent if it matches with the particular identified transmission link (G1-G4) in essential characteristics and if it differs from the particular transmission link (G1-G4) in only at least one measurement uncertainty contribution (U11-U42); and **in that** the computer program product (C) compares digital information (I) of the particular transmission link (G1-G4) with digital information (I*) of replacement transmission links (G1*-G4*) stored in the data memory (R2).

13. The computer program product (C) according to claim 12, **characterized in that** for carrying out a step e) the computer program product (C) determines that a replacement transmission link (G1*-G4*) is equivalent to the particular transmission link (G1-G4); and **in that** the computer program product (C) retrieves digital information (I) of the determined replacement transmission link (G1*-G4*) from the data memory (R2).

## Revendications

1. Procédé (V) exécuté par un système d'ordinateur (R) pour déterminer l'incertitude de mesure (U) d'un système de mesure (S) ; dans lequel ledit système de mesure (S) détecte une grandeur physique mesurée ; lequel système de mesure (S) comprend une pluralité d'éléments de transfert (G1-G4) ; et lesquels éléments de transfert (G1-G4) forment une chaîne de mesure (K) pour détecter la grandeur physique mesurée, dans lequel un élément de transfert (G1) est un capteur, un élément de transfert (G2) est un câble de signal, un élément de transfert (G3) est un amplificateur électrique et un élément de transfert (G4) est une unité d'évaluation, dans lequel les éléments de transfert (G1-G4) directement adjacents les uns aux autres dans la chaîne de mesure (K) sont dans une relation de cause à effet les uns par rapport aux autres ; et dans lequel ledit système d'ordinateur (R) comprend un processeur de traitement des données (R1) et un produit programme d'ordinateur (C), lequel produit programme d'ordinateur (C) peut être exécuté dans le processeur de traitement des données (R1) pour mettre en œuvre le procédé consistant en les étapes suivantes :
a) saisie, au niveau d'un dispositif d'entrée (R3), des informations pour l'identification les éléments de transfert (G1-G4) de la chaîne de mesure (K) et communication des informations saisies sous forme de données d'information numériques (I) au processeur de traitement des données (R1) par l'intermédiaire d'au moins une unité de communication (R5, R5') ; ou
appellation d'un émetteur d'informations numériques avec des données d'information numériques (I) des éléments de transfert (G1-G4) de la chaîne de mesure (K) y stockées et communication des informations saisies sous forme de données d'information numériques (I) au processeur de traitement des données (R1) par l'intermédiaire d'au moins une unité de communication (R5, R5') ;
lecture des données d'information numériques (I) par le produit programme d'ordinateur (C) ;
b) accès, par le produit programme d'ordinateur (C), à une mémoire de données (R2) du système d'ordinateur (R), dans lequel mémoire de données (R2) sont stockées des grandeurs d'influence des éléments de transfert (G1-G4) précédemment déterminées ;
lecture, par le produit programme d'ordinateur (C), des étiquettes lisibles des grandeurs d'influence (E11-E42) des éléments de transfert (G1-G4) identifiés, et
détermination, par le produit programme d'ordinateur (C), une pertinence des grandeurs d'influence (E11-E42) des éléments de transfert (G1-G4) identifiés pour l'incertitude de mesure (U) du système de mesure (S) ; dans lequel le produit programme d'ordinateur (C) détermine, pour chaque élément de transfert (G1-G4) identifié, au moins une grandeur d'influence (E11-E42) pertinente affectée à l'élément de transfert (G1-G4) identifié, dans lequel les grandeurs d'influence (E11-E42) pertinentes sont celles qui contribuent le plus à l'incertitude de mesure (U) du système de mesure (S) et dont la contribution totale à l'incertitude de mesure (U) du système de mesure (S) est d'au moins 80 % ; et en ce que le produit programme d'ordinateur (C) charge la grandeur d'influence (E11-E42) déterminée à partir de la mémoire de données (R2) ; et
c) utilisation des grandeurs d'influence (E11-E42) jugées pertinentes pour calculer l'incertitude de mesure (U) du système de mesure (S) par le produit programme d'ordinateur (C).

2. Procédé (V) selon la revendication 1, **caractérisé par** une étape : d) détermination d'au moins un élément de transfert (G1-G4) identifié ayant une contribution à l'incertitude de mesure (U11-U42) importante, laquelle contribution à l'incertitude de mesure (U11-U42) importante est plus petite ou plus grande qu'au moins une des autres contributions à l'incertitude de mesure (U11-U42).

3. Procédé (V) selon la revendication 2, **caractérisé par** une étape : e) détermination d'au moins un élément de transfert de remplacement (G1*-G4*) ayant une contribution à l'incertitude de mesure de remplacement (U11*-U42*) pour au moins un élément de transfert (G1-G4) particulier identifié.

4. Procédé (V) selon la revendication 3, **caractérisé en ce que** l'élément de transfert de remplacement (G1*-G4*) déterminé est physiquement fourni ; et **en ce que** l'élément de transfert (G1-G4) particulier est remplacé dans le système de mesure (S) par l'élément de transfert de remplacement (G1*-G4*) physiquement fourni.

5. Procédé (V) selon la revendication 3, **caractérisé en ce que** l'incertitude de mesure (U) calculée est affichée sur un dispositif de sortie (R4).

6. Produit programme d'ordinateur (C) pour l'exécution du procédé selon l'une quelconque des revendications 1 à 5, lequel produit programme d'ordinateur (C) peut être chargé dans le processeur de traitement des données (R1) d'un système d'ordinateur (R), **caractérisé en ce que** le produit programme d'ordinateur (C) exécute les étapes a) à c).

7. Produit programme d'ordinateur (C) selon la revendication 6, **caractérisé en ce que** pour effectuer l'étape a), le produit programme d'ordinateur (C) lit les données d'information numériques (I) pour l'identification des éléments de transfert (G1-G4) de la chaîne de mesure (K) ; **en ce que** le système d'ordinateur (R) comprend un dispositif d'entrée (R3) et une unité de communication (R5) ; **en ce que** les informations pour l'identification des éléments de transfert (G1-G4) de la chaîne de mesure (K) peuvent être saisies par l'intermédiaire du dispositif d'entrée (R3) ; et **en ce que** l'unité de communication (R5) communique les informations saisies au niveau du dispositif d'entrée (R3) au processeur de traitement des données (R1) sous forme de données d'information numériques.

8. Produit programme d'ordinateur (C) selon la revendication 6, **caractérisé en ce que** pour effectuer l'étape a), le produit programme d'ordinateur (C) lit les données d'information numériques (I) pour l'identification des éléments de transfert (G1-G4) de la chaîne de mesure (K) ; **en ce que** le système d'ordinateur (R) comprend un premier dispositif d'entrée (R3), un second dispositif d'entrée (R3'), une première unité de communication (R5) et une seconde unité de communication (R5') ; **en ce que** la première unité de communication (R5) est un réseau ; **en ce que** chaque dispositif d'entrée (R3, R3') est connecté à la première unité de communication (R5) ; **en ce que** les informations pour l'identification des éléments de transfert (G1-G4) de la chaîne de mesure (K) peuvent être saisies par l'intermédiaire du premier dispositif d'entrée (R3) ; **en ce que** le premier dispositif d'entrée (R3) appelle une adresse réseau du second dispositif d'entrée (R3') par l'intermédiaire de la première unité de communication (R5) et communique les informations saisies sous forme de données numériques (I) au second dispositif d'entrée (R3') appelé ; et **en ce que** la seconde unité de communication (R5') communique les informations numériques (I) communiquées au second dispositif d'entrée (R3') au processeur de traitement des données (R1).

9. Produit programme d'ordinateur (C) selon la revendication 6, **caractérisé en ce que** pour effectuer l'étape a), le produit programme d'ordinateur (C) lit les données d'information numériques pour l'identification des éléments de transfert (G1-G4) de la chaîne de mesure (K) ; **en ce que** le système d'ordinateur (R) comprend au moins un premier dispositif d'entrée (R3), un second dispositif d'entrée (R3'), une première unité de communication (R5) et une seconde unité de communication (R5') ; dans lequel la première unité de communication (R5) est un réseau ; **en ce que** chaque dispositif d'entrée (R3, R3') est connecté à la première unité de communication (R5) ; **en ce que** les éléments de transfert (G1-G4) comprennent au moins un émetteur d'informations ; **en ce que** l'émetteur d'informations stocke les données d'information numériques (I) des éléments de transfert (G1-G4) ; **en ce que** l'émetteur d'informations est connecté à la première unité de communication (R5) par l'intermédiaire du premier dispositif d'entrée (R3) ; **en ce que** le produit programme d'ordinateur (C) appelle l'adresse réseau du premier dispositif d'entrée (R3) dans le réseau ; **en ce que** l'émetteur d'informations ainsi appelé communique les données d'information numériques (I) à l'adresse réseau du dispositif d'entrée (R3) ; et **en ce que** l'unité de communication (R5) communique les informations numériques (I) communiquées au second dispositif d'entrée (R3) au processeur de traitement des données (R1).

10. Produit programme d'ordinateur (C) selon l'une quelconque des revendications 6 à 9, **caractérisé en ce que** le système d'ordinateur (R) comprend une mémoire de données (R2) ; **en ce que** les meilleures estimations de l'influence et les contributions à l'incertitude de mesure (U11-U42) attribuées aux meilleures estimations de l'influence pour les grandeurs d'influence des éléments de transfert (G1-G4) précédemment déterminées sont stockées dans la mémoire de données (R2) ; **en ce que** pour l'exécution de l'étape c), le produit programme d'ordinateur (C) charge de la mémoire de données (R2) pour chaque grandeur d'influence (E11-E42) déterminée une contribution à l'incertitude de mesure (U11-U42) attribuée à la meilleure estimation de l'influence de la grandeur d'influence (E11-E42) déterminée ; et **en ce que** le produit programme d'ordinateur (C) calcule l'incertitude de mesure (U) du système de mesure (S) en calculant la somme des carrés des contributions à l'incertitude de mesure (U11-U42) et en calculant la racine carrée de la somme ainsi calculée.

11. Produit programme d'ordinateur (C) selon la revendication 10, **caractérisé en ce que** pour l'exécution d'une étape d), le produit programme d'ordinateur détermine au moins un élément de transfert (G1-G4) identifié qui apporte une contribution extrême à l'incertitude de mesure (U11-U42), laquelle contribution extrême à l'incertitude de mesure (U11-U42) est plus petite ou plus grande qu'au moins une des autres contributions à l'incertitude de mesure (U11-U42).

12. Produit programme d'ordinateur (C) selon la revendication 11, **caractérisé en ce que** le système d'ordinateur (R) comprend une mémoire de données (R2) ; **en ce que** des données d'information numériques (I*) des éléments de transfert de remplacement (G1*-G4*) sont stockées dans ladite mémoire de données (R2), dans lequel un élément de transfert de remplacement (G1*-G4*) est équivalent lorsqu'il correspond à l'élément de transfert (G1-G4) particulier identifié dans les caractéristiques essentielles et lorsqu'il n'est différent de l'élément de transfert (G1-G4) particulier que dans au moins une contribution à l'incertitude de mesure (U11-U42) ; et **en ce que** le produit programme d'ordinateur (C) compare les informations numériques (I) de l'élément de transfert (G1-G4) particulier avec les informations numériques (I*) des éléments de transfert de remplacement (G1*-G4*) stockées dans la mémoire de données (R2).

13. Produit programme d'ordinateur (C) selon la revendication 12, **caractérisé en ce que** pour l'exécution d'une étape e), le produit programme d'ordinateur (C) détermine qu'un élément de transfert de remplacement (G1*-G4*) est équivalent à l'élément de transfert (G1-G4) particulier ; et **en ce que** le produit programme d'ordinateur (C) charge les informations numériques (I) pour l'élément de transfert de remplacement (G1*-G4*) déterminé de la mémoire de données (R2).
